# EUROPEAN PATENT SPECIFICATION

(11) **EP 2 848 470 B1**
(45) Date of publication and mention of the grant of the patent: **10.05.2017**
(21) Application number: 13183969.8
(22) Date of filing: 11.09.2013
(51) Int. Cl.: B60Q 3/208, B60Q 3/64, B60J 7/00

(54) **Sunshade assembly comprising electric switching means**
Sonnenschutzanordnung mit elektrischen Schaltmitteln
Ensemble pare-soleil comprenant des moyens de commutation électrique

(43) Date of publication of application: 18.03.2015
(73) Proprietor: Webasto SE, 82131 Stockdorf (DE)
(72) Inventor: Mollé, Christophe, 85140 Les Essarts (FR)
(74) Representative: Epping - Hermann - Fischer

(56) References cited:
- WO-A1-03/074329
- DE-A1-102008 047 508
- DE-A1-102012 012 814

## Description

The present invention generally relates to automotive equipement, and more particularly to a sunshade assembly.

For vehicles having a roof equipped with transparent surfaces, for example made of a glass panel, a sunshade assembly can be used to control the light transmission. In a closed position, the sunshade completely covers the transparent surface, and no light enters the vehicle. In a fully open position, light can freely go through the transparent surface.

On the other side, roof lighting devices have been proposed to obtain special atmospheres inside a vehicle by creating a plurality of light spots in an otherwise fully opaque roof. These devices are often based on light sources and optical fibers, each optical fibers bringing the light at one of the desired light spots. The light spots can also be brougt by small light emitting diodes weaved or sewed with the fabric.

Naturally, such an atmosphere is now also desirable with a sunshade, and devices for illuminating a sunshade have been presented in the following documents.

DE102008047508 discloses a specific solution for bringing electricity in the sunshade panel, mainly using electric contacts provided on the sunshade panel, and electric contacts provided on the lateral guiding rails. However, space constraints around the rails hinder the use of this working principle for embodiments requiring a plurality of contacts.

FR2934205 discloses a flexible mobile roof comprising light sources mounted in an electric circuit connected to the battery of the vehicle. Centering means are provided on the roof and/or the body of the vehicle for precisely guiding the roof in its closed position. The electric contact between the body of the vehicle and the mobile roof is arranged at the level of this roof centering means.

KR20090115543 discloses an illuminated sunshade assembly. The light source is located on the fixed part of the car and light is brought to the sunshade panel using light guiding elements. However, this principle requires a good alignment of the light guiding elements. This alignment can be difficult due to manufacturing imprecision.

A similar principle is used in DE102011016433. The light sources are fixed and located on the frame surrounding the movable sunshade panel. When the sunshade panel is closed, the light is transmitted through the sunshade panel itself, which comprises nanoparticles to create the light effect. Here again, a good alignment is necessary to obtain the desired light effect.

In DE10204359 and EP1903359, one edge of the sunshade panel comprises a light source, and the light is transmitted through the panel itself. However, this working principle can only be used for some specific sunshade panel construction.

Document DE 10 2012 012 814 A discloses a cover device for regionwise covering of roof opening of passenger car to obviate incident of light into passenger compartment. The device has a cover that is movable along an opening of a vehicle roof between two positions, where a portion of the opening is covered in one position and exposed in another position. A luminous element is held at the cover as well as an electrical storage device to supply electric current to the luminous element.

While these improvements mark a great advance in the art, further advances are possible and desired. For example, reducing the connection volume between the fixed part and movable panel, or avoiding sources of noise coming from vibrations and relative movement between parts. Further, when the electric light source is provided in the movable panel and the electric power comes from the fixed part of the vehicle, a reliable and robust solution is needed for bringing the electricity from the fixed part to the movable panel.

The primary object of the present invention is to devise a sunshade assembly which is improved as compared to the known constructions and which, in particular, as electric contact switching means provided both on the sunshade frame and on the corresponding zone of the sunshade bar.

Accordingly, the present invention provides a sunshade assembly, to be mounted under a glass panel of a roof of a vehicle, said assembly comprising a sunshade panel, a sunshade frame, comprising lateral guiding means for guiding said sunshade panel as well as a front portion, a sunshade bar, for moving the sunshade panel between a closed state and an open state, fixed to the sunshade panel and arriving at the level of the front portion of the sunshade frame when the sunshade panel is fully closed.

This sunshade assembly is characterised in that it also comprises electrical switching means to bring electricity to the sunshade panel only when it is in the fully closed state, said electrical switching means comprising fixed contacts, provided on the frame as well as corresponding movable contacts, provided on the sunshade bar. In the fully closed state of the sunshade panel the fixed contacts and the moveable contacts are electrically closed and electricity is supplied to the sunshade panel.

According to a possible additional feature, the sunshade bar being preferably at least partly inside the front portion when the sunshade panel is fully closed. This feature allows the arrangement of the movable contacts on top of the sunshade bar.

In some embodiments of the present invention, the fixed contacts are provided on the front portion of the frame. With such a construction, a bigger space can be dedicated to these electric contacts without any interference with the guiding elements.

According to a possible additional feature, the fixed contacts stand next to each other. Therefore, it is possible to build a subassembly dedicated to the electric contact means, and this subassembly can be simply integrated in existing sunshade bar designs and corresponding sunshade frames.

According to another possible feature, a light source is provided in the sunshade bar, and said light source is electrically coupled to the movable contacts. Therefore, a module integrating the movable contacts and the light source can be designed and inserted in the sunshade bar. The problem of light transmission from the fixed vehicle body to the movable panel is solved. As the light source is integrated in the sunshade bar, the flexible portion of the sunshade panel remains unchanged.

Additional feature that be added to the invention can include optical fibers provided in the sunshade panel for transmitting light emitted by the light source. The transmission of light from the light source to the end light point has almost no influence on the panel thickness.

According to another possible feature, for each pair of two contacts made of a fixed contact and the corresponding movable contact, at least one of said contacts is elastically deformed when the electrical switching means are electrically closed: the fixed contact and/or the movable contact can be elastically deformed. With at least one of the two contacts being deformable, the conductivity between the fixed contact and the movable contact is improved, as they can be pressed against each other.

According to another possible additional feature, each movable contact has a shape of a circular open ring, thereby improving its flexibility.

According to another feature that can be added to the invention, during the movement of opening or closing the electrical switching means, a relative movement exist between the movable contact and the fixed contact while they already touch each other in a certain electricity conducting surface. This relative movement cleans the contact, thereby improving the quality of electricity conduction.

In some embodiments of the invention, the sunshade bar arrives inside the front portion when the sunshade panel is fully closed, and the electrical switching means are provided in the zone hidden by the sunshade panel in its fully closed position, which produces a contact area which is inconspicious.

These and other features and advantages will be apparent from the detailed description taken with reference to the accompanying drawings:
- figure 1 is a cross section of the sunshade assembly in the area of the front portion of the frame;

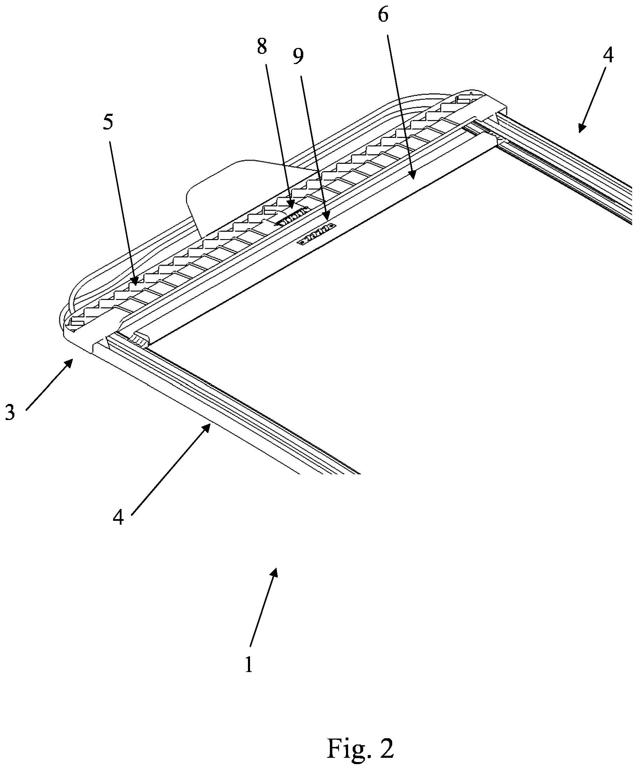

- figure 2 shows a top view of the sunshade assembly;
- figure 3 shows a top view of the sunshade assembly, with the top and bottom portions of the sunshade bar being separated;
- figures 4 and 5 are both detailed views of the fixed and movable contacts: figure 4 is a top view and figure 5 is a bottom view.

A sunshade assembly 1 is to be mounted under a transparent roof surface in a vehicle. This transparent roof surface can be movable, like an open roof. The transparent roof surface can also be fixed, in the form of a fixed glass panel. The sunshade assembly 1 comprises a sunshade panel 2 that can be moved back and forth for adjusting the level of light coming in the vehicle through the transparent surface.

When the sunshade panel 2 is fully closed, it usually completely covers the entire transparent roof surface so that no light can enter. In possible embodiments, the fabric has a mesh construction and has a degree of transparency. When the sunshade panel 2 is fully open, light can enter in the vehicle through the maximum portion of the transparent surface. Preferably, in the fully open position, the sunshade panel 2 creates no shadow at all in the vehicle. The sunshade panel 2 can also be in an intermediate position between the fully closed position and the fully open position. Once fixed in the vehicle, the panel 2 is normaly under the transparent surface.

Of course, said roof surface can be only partially transparent, allowing the transmission of only a portion of the light, or just translucent. On the other side, the sunshade panel 2 is preferably fully opaque and able to completely stop the light transmission. Alternatively, the sunshade panel 2 is only partially opaque, and only reduces the light transmission. From a general standpoint, the sunshade panel 2 aims at reducing the level of light going through the roof surface.

The sunshade panel 2 is preferably a flexible, thin and flat element, rolled or folded in its fully open position. The sunshade panel 2 has a fixed edge, at the level of which it is rolled or folded in its open position. At the opposite end, the sunshade panel 2 has a mobile edge, which is moved to change the position between the fully closed and the fully open.

For moving the mobile edge of the panel 2, a mechanical actuator can be provided, for example in the shape of an electric motor, with a corresponding transmission, for example a helicoidal cable and a pinion. The movement can also be generated by the user directly, by simply pulling or pushing the sunshade panel 2 in the desired position.

The panel 2 is provided, at its mobile edge, with a rigid sunshade bar 6, preferably extending from one lateral edge of the panel 2 to the other. The panel 2 is fixed to the rigid sunshade bar 6. This sunshade bar 6 is moved, either by hand or by any other actuator, to open or close the sunshade panel 2. The two ends of the sunshade bar 6 are guided in two corresponding lateral guiding means 4. A handle can be provided in the sunshade bar 6, in the form of a recess or a protrusion. The user can grasp this handle to move the sunshade bar 6 and the fabric attached thereto.

The sunshade assembly 1 also comprises a rigid sunshade frame 3. This frame 3 has a global rectangular shape, with two longitudinal portions and at least one and preferably two transversal portions. The longitudinal portions are parallel to the direction of the panel 2 movement, and the at least one transversal portion is rectangular thereto. The lateral guiding means 4 for the sunshade bar 6 are provided in the two longitudinal portions of the frame 3. In the open position, the movable edge of the sunshade panel 2 and the corresponding sunshade bar 6 are located at the level of one transversal portion of the frame 3, named front portion 5. The fixed edge of the sunshade panel 2 is located at the opposite end of the longitudinal portions of the frame 3.

When the sunshade assembly 1 is mounted in a vehicle, the front portion 5 can be closer to the front zone of the vehicle, or closer to the rear zone of the vehicle.

Optical fibers are provided in the sunshade panel 2 for bringing light points at the surface of said panel 2. The light source to which these optical fibers are connected is preferably made of at least one light emitting diode, or LED. This light source is preferably mounted in the sunshade bar 6. The light source can have any location from one end of the sunshade bar 6 to the other, depending on the desired lighting scheme in the fabric: at one end, in the middle, at both ends, etc.

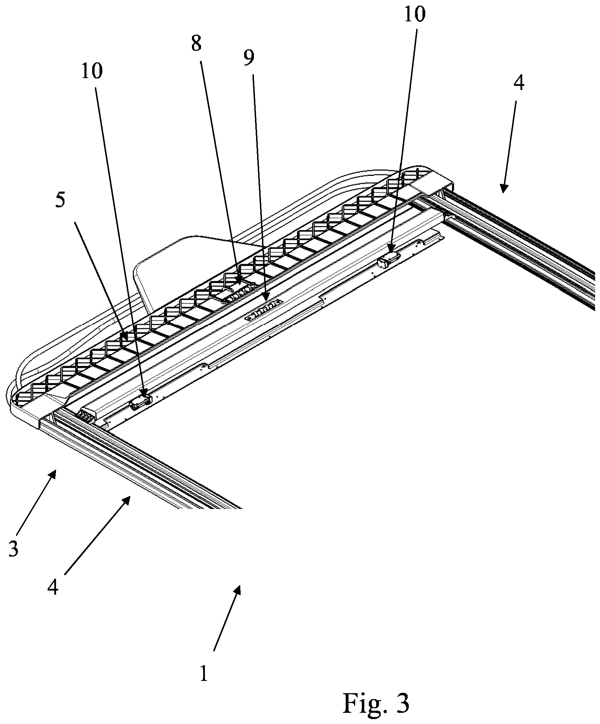

Consequently, as best seen on figure 3, collectors 10 can be provided in the sunshade bar 6 for guiding the portion of the optical fibers which extends inside the sunshade bar 6.

According to the invention, the light source is powered by electricity, which is brought to the sunshade bar 6 only if the sunshade panel 2 is fully closed. The light source power circuit comprises electric switching means 7, which is closed only when the panel 4 is fully closed. Closing this electric switching means can immediately switch the light source on. In other embodiments, a second control switch is provided for the light source. When the sunshade panel 2 is fully closed, this second control switch will switch the light source on. The light source is shut off if the second control switch is opened or if the panel 2 is opened, thereby opening the electrical switching means 7. The second control switch can correspond to the vehicle front light control switch, or to a dedicated control switch.

For the electrical switching means 7, the sunshade assembly 1 comprises, on the one side, movable contacts 9, provided on the sunshade bar 6, and, on the other side, fixed contacts 8, provided on the frame 3, preferably on the front portion 5. The contacts 8 are designated as movable contacts, because they are movable with the sunshade bar 6. The contacts 8 are designated as fixed contacts, because they are fixedly arranged in the frame 3. When the fixed contacts 8 touch the movable contacts 9, the electric circuit for powering the light source is closed, and the latter can be enlighted. When the fixed contacts 8 and the movable contacts 9 are separated, the electric circuit is open and no electric power can be brought to the light source.

The number of contacts depend on the light source working principle. For simple light sources, a pair of two single fixed contacts 8 and a corresponding pair of two movable contacts 9 can be enough. For more sophisticated light sources, a plurality of movable contacts 9 and corresponding fixed contacts 8 is to be provided.

Therefore, each movable contact 9 has a corresponding fixed contact 8 it can touch, for electric conductivity purposes, when the sunshade panel 2 is closed. When the sunshade bar 6 is taken away from the front portion 5, the fixed contact 8 and the movable contact 9 are separated from each other by a certain gap, thereby opening the light source electric circuit, switching it off.

The fixed contacts 8 are preferably connected to an electric power source by wires, which extend in the lateral portions of the frame 3. These wires are connected to an electric power source in the vehicle.

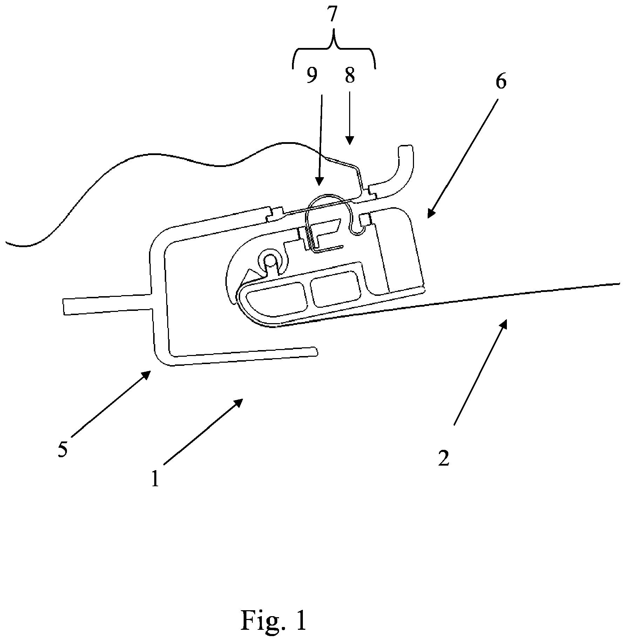

As may be best seen by reference to figure 1, the cross section of the front portion 5 has the shape of a C, with a bottom flange and a top flange. After installation, the bottom flange is normaly located under the top flange. In the fully closed position of the panel 2, the sunshade bar 6 is at least partly in the front portion of the frame 3. The sunshade bar 6 is held between the bottom flange and the top flange of the front portion 5.

Embodiments without any bottom flange are also possible, as the latter mainly serves to provide a support for the vehicle roof headliner. Figure 1 shows that the fixed contacts 8 are provided in the top flange of the front portion 5. In a similar fashion, the movable contacts 9 are provided on the corresponding surface of the sunshade bar 6.

The sunshade bar 6 has mainly the form of a beam, with a top surface and a bottom surface. Fig 3 shows that the sunshade bar 6 is an assembly of a top portion and a bottom portion, on which the connectors 10 are fixed. When installed, the bottom surface lies under the top surface. Once the panel 2 is closed, the top surface of sunshade bar 6 is at the level of the top flange of the front portion 5, so that the fixed contacts 8 and the movable contacts 9 can touch each other, and the bottom surface is at the level of the bottom of the front portion 5.

It should be noted that, with reference to figure 1, the movement of the sunshade bar 6 to reach the fully closed position is from the right to the left, and that the contact surface between the two contacts, fixed 8 or movable 9, is approximately also parallel to this movement. Therefore, a relative movement can exist between a movable contact 8 and the corresponding fixed contact 9, even when they already touch each other. This relative movement produces a useful friction and slightly scratches the two contacts, thereby cleaning them each time the sunshade panel 2 is fully closed or moved from this fully closed position.

As best seen from figure 1, the contact surface between a fixed contact 8 and the corresponding movable contact 9 is approximately parallel to the direction of the panel 2 movement. A taper angle can be provided, so that the contacts are closer if the panel 2 is moved in the direction of its fully closed position. The fixed contacts 8 are located at one side of this surface, and the movable contacts 9 are located at the opposite side. When the sunshade assembly 1 is installed in a vehicle, the fixed contact 8 is in the upper side of the surface and the movable contact 9 is in the lower side of the surface.

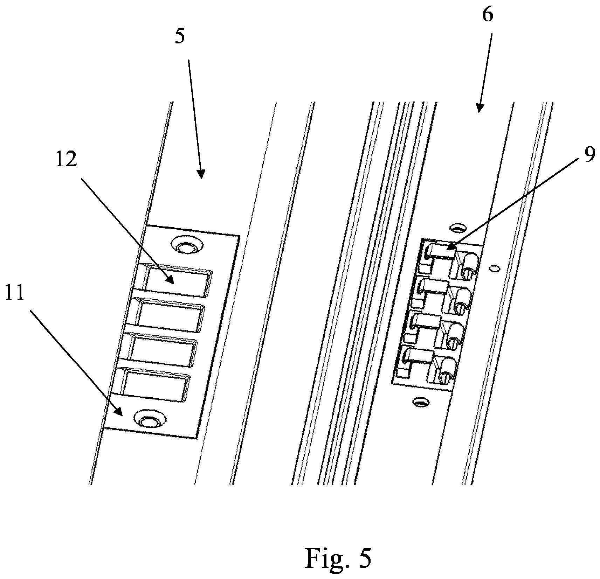

The bottom view of figure 5 shows that the fixed contacts 8 are received in an opening in the top flange of the front portion 5. Said opening is closed by a plate 11, the latter having a separate rectangular window 12 for each fixed contact 8. This figure shows a plate 11 with four windows 12, for a light source in the form of a LED, normaly requiring four different electric lines, and consequently four pair of fixed 8 and movable 9 contacts. The four corresponding movable contacts 9 are at the right handside of figure 5.

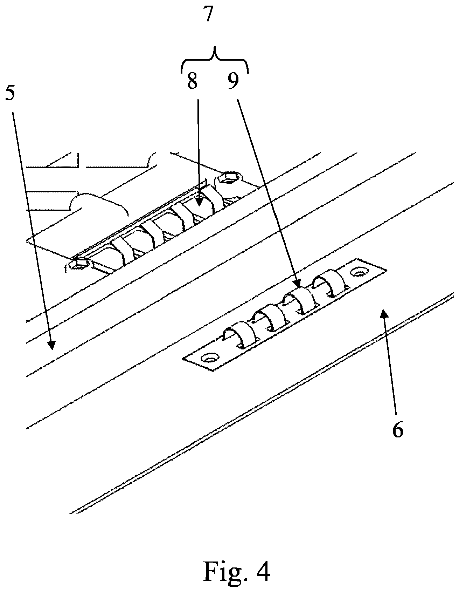

As best seen on figures 1 and 4, the fixed contacts 8 are flat and the movable contacts 9 have the shape of an open ring. One end of this open ring is fixed to the sunshade bar 6, and the other end is free. The movable contact 9 can therefore be slightly elastically deformed when pressed against the fixed contact 8. This flexibility compensates the manufacturing tolerances. The fixed contact 8 has a flat zone, in front of the window 12, and an extension for connecting an electric wire. The ring portion of the movable contact 9 touches the flat portion of the fixed contact 8 through the window 12.

However, although not illustrated in the attached figures, it is evident that the configuration can be with flat movable contacts 9 and ring shaped fixed contacts 8.

In the embodiment illustrated in the drawings, the contacts are positioned one next to the other, as seen for example on figure 5. The fixed contacts 9 are located approximately in the middle of the front portion 5. Correspondingly, the movable contacts 8 are located approximately in the middle of the sunshade bar 6. Therefore, the electrical switching means 7 is located approximately in the middle of the sunshade bar 6. This creates a compact construction.

Alternatively, the fixed contacts 9 can be separated from each other, the corresponding movable contacts 8 being in the corresponding location on the frame 3.

## Claims

1. Sunshade assembly (1), to be mounted under a glass panel of a roof of a vehicle, said assembly (1) comprising
a sunshade panel (2),
a sunshade frame (3), comprising lateral guiding means (4) for guiding said sunshade panel (2) as well as a front portion (5),
a sunshade bar (6), for moving the sunshade panel (2) between a closed state and an open state, fixed to the sunshade panel (2) and arriving at the level of the front portion (5) of the sunshade frame (3) when the sunshade panel (2) is fully closed,
**characterised in that**
the sunshade assembly (1) also comprises electrical switching means (7) to bring electricity to the sunshade panel (2) only in the fully closed state,
said electrical switching means (7) comprising fixed contacts (8), provided on the frame (3) as well as corresponding movable contacts (9), provided on the sunshade bar (6) such that the fixed contacts (8) and the moveable contacts (9) are electrically closed in the fully closed state of the sunshade panel (2).

2. Sunshade assembly (1) according to claim 1,
wherein
the sunshade bar (6) being preferably at least partly inside the front portion (5) when the sunshade panel (2) is fully closed.

3. Sunshade assembly (1) according to claim 1 or 2,
wherein
the fixed contacts (8) are provided on the front portion (5) of the frame (3), preferably approximately in the center thereof.

4. Sunshade assembly (1) according to any of claim 1 to 3, wherein
the fixed contacts (8) stand next to each other.

5. Sunshade assembly (1) according to any of claim 1 to 4, wherein
a light source is provided in the sunshade bar (6), and said light source is electrically coupled to the movable contacts (9).

6. Sunshade assembly (1) according to claim 5, wherein
optical fibers are provided in the sunshade panel (2) for transmitting light emitted by the light source, and at least one collector (10) for said optical fibers is preferably provided in the front portion (5).

7. Sunshade assembly (1) according to any of claim 1 to 6, wherein
for each pair of two contacts made of a fixed contact (8) and the corresponding movable contact (9), at least one of said contacts is elastically deformed when the electrical switching means (7) are electrically closed.

8. Sunshade assembly (1) according to claim 7,
wherein
each movable contact (9) has a shape of a circular open ring.

9. Sunshade assembly (1) according to any of claim 1 to 7, wherein
during the movement of opening or closing the electrical switching means (7), a relative movement exist between the movable contact (9) and the fixed contact (8) while they already touch each other in a certain electricity conducting surface,
so that the electricity conducting surface is cleaned each time the sunshade panel (2) is open or closed.

10. Sunshade assembly (1) according to any of claim 1 to 9, wherein
the sunshade bar (6) arrives inside the front portion (5) when the sunshade panel (2) is fully closed,
the electrical switching means (7) are provided in the zone hidden by the sunshade panel (2) in its fully closed position.

## Patentansprüche

1. Sonnenschutzanordnung (1), die unter einem Glaselement eines Dachs eines Fahrzeugs anzubringen ist, wobei die Anordnung (1) Folgendes umfasst:
ein Sonnenschutzelement (2),
einen Sonnenschutzrahmen (3), der seitliche Führungsmittel (4) zum Führen des Sonnenschutzelements (2) sowie einen vorderen Teil (5) umfasst,
eine Sonnenschutzstange (6), um das Sonnenschutzelement (2) zwischen einem geschlossenen Zustand und einem geöffneten Zustand zu bewegen, die an dem Sonnenschutzelement (2) befestigt ist und auf Höhe des vorderen Teils (5) des Sonnenschutzrahmens (3) ankommt, wenn das Sonnenschutzelement (2) vollständig geschlossen ist,
**dadurch gekennzeichnet, dass**
die Sonnenschutzanordnung (1) außerdem elektrische Schaltmittel (7) umfasst, um das Sonnenschutzelement (2) nur im vollständig geschlossenen Zustand mit Strom zu versorgen,
wobei die elektrischen Schaltmittel (7) feste auf dem Rahmen (3) vorgesehene Kontakte (8) sowie entsprechende bewegliche auf der Sonnenschutzstange (6) vorgesehene Kontakte (9) umfassen, und zwar derart, dass die festen Kontakte (8) und die beweglichen Kontakte (9) in dem vollständig geschlossenen Zustand des Sonnenschutzelements (2) elektrisch geschlossen sind.

2. Sonnenschutzanordnung (1) nach Anspruch 1, wobei
sich die Sonnenschutzstange (6) vorzugsweise wenigstens zum Teil innerhalb des vorderen Teils (5) befindet, wenn das Sonnenschutzelement (2) vollständig geschlossen ist.

3. Sonnenschutzanordnung (1) nach Anspruch 1 oder 2, wobei
die festen Kontakte (8) an dem vorderen Teil (5) des Rahmens (3), vorzugsweise ungefähr in der Mitte desselben, vorgesehen sind.

4. Sonnenschutzanordnung (1) nach einem der Ansprüche 1 bis 3, wobei
die festen Kontakte (8) nebeneinander angeordnet sind.

5. Sonnenschutzanordnung (1) nach einem der Ansprüche 1 bis 4, wobei
eine Lichtquelle in der Sonnenschutzstange (6) vorgesehen ist und die Lichtquelle mit den beweglichen Kontakten (9) elektrisch verbunden ist.

6. Sonnenschutzanordnung (1) nach Anspruch 5, wobei
Lichtleiter in dem Sonnenschutzelement (2) vorgesehen sind, um von der Lichtquelle emittiertes Licht zu übertragen, und wenigstens ein Kollektor (10) für die Lichtleiter vorzugsweise in dem vorderen Teil (5) vorgesehen ist.

7. Sonnenschutzanordnung (1) nach einem der Ansprüche 1 bis 6, wobei
für jedes Paar zweier Kontakte, das aus einem festen Kontakt (8) und dem entsprechenden beweglichen Kontakt (9) besteht, wenigstens einer der Kontakte elastisch verformt ist, wenn die elektrischen Schaltmittel (7) elektrisch geschlossen sind.

8. Sonnenschutzanordnung (1) nach Anspruch 7, wobei
jeder bewegliche Kontakt (9) die Form eines kreisförmigen offenen Rings aufweist.

9. Sonnenschutzanordnung (1) nach einem der Ansprüche 1 bis 7, wobei
während der Bewegung zum Öffnen oder Schließen der elektrischen Schaltmittel (7) zwischen dem beweglichen Kontakt (9) und dem festen Kontakt (8) eine relative Bewegung besteht, während sie sich bereits in einer bestimmten elektrisch leitenden Fläche berühren,
so dass die elektrisch leitende Fläche immer dann gereinigt wird, wenn das Sonnenschutzelement (2) geöffnet oder geschlossen wird.

10. Sonnenschutzanordnung (1) nach einem der Ansprüche 1 bis 9, wobei
die Sonnenschutzstange (6) innerhalb des vorderen Teils (5) ankommt, wenn das Sonnenschutzelement (2) vollständig geschlossen ist,
die elektrischen Schaltmittel (7) in dem Bereich vorgesehen sind, der von dem Sonnenschutzelement (2) verdeckt ist, wenn dieses sich in seiner vollständig geschlossenen Stellung befindet.

## Revendications

1. Ensemble pare-soleil (1), à monter sous le panneau vitré du toit d'un véhicule, ledit ensemble (1) comprenant :
un panneau (2) de pare-soleil,
un cadre (3) de pare-soleil, comprenant des moyens de guidage (4) latéraux pour guider ledit panneau (2) de pare-soleil ainsi qu'une partie avant (5),
une barre (6) de pare-soleil, pour déplacer le panneau (2) de pare-soleil entre un état fermé et un état ouvert, fixé au panneau (2) de pare-soleil et arrivant au niveau de la partie avant (5) du cadre (3) de pare-soleil quand le panneau (2) de pare-soleil est complètement fermé, **caractérisé en ce que** :
l'ensemble pare-soleil (1) comprend aussi des moyens de commutation électrique (7) pour amener l'électricité au panneau (2) de pare-soleil seulement quand il est complètement fermé,
lesdits moyens de commutation électrique (7) comprennent des contacts fixes (8), disposés sur le cadre (3), ainsi que des contacts mobiles (9), disposés sur la barre (6) de pare-soleil de telle sorte que les contacts fixes (8) et les contacts mobiles (9) ferment un circuit électrique quand le panneau (2) de pare-soleil est complètement fermé.

2. Ensemble pare-soleil (1) selon la revendication 1, dans lequel la barre (6) de pare-soleil est de préférence au moins partiellement à l'intérieur de la partie avant (5) quand le panneau (2) de pare-soleil est complètement fermé.

3. Ensemble pare-soleil (1) selon la revendication 1 ou 2, dans lequel les contacts fixes (8) sont disposés sur la partie avant (5) du cadre (3), de préférence à peu près au centre de celle-ci.

4. Ensemble pare-soleil (1) selon l'une quelconque des revendications 1 à 3, dans lequel les contacts fixes (8) sont l'un à côté de l'autre.

5. Ensemble pare-soleil (1) selon l'une quelconque des revendications 1 à 4, dans lequel une source lumineuse est disposée dans la barre (6) de pare-soleil et ladite source lumineuse est raccordée aux contacts mobiles (9).

6. Ensemble pare-soleil (1) selon la revendication 5, dans lequel des fibres optiques sont disposées dans le panneau (2) de pare-soleil pour transmettre la lumière émise par la source lumineuse, et au moins un collecteur (10) pour lesdites fibres optiques est disposé de préférence dans la partie avant (5).

7. Ensemble pare-soleil (1) selon l'une quelconque des revendications 1 à 6, dans lequel, pour chaque paire de deux contacts constituée d'un contact fixe (8) et du contact mobile (9) correspondant, au moins un desdits contacts est déformé élastiquement quand se ferment les moyens de commutation électrique (7).

8. Ensemble pare-soleil (1) selon la revendication 7, dans lequel chaque contact mobile (9) a la forme d'un anneau circulaire ouvert.

9. Ensemble pare-soleil (1) selon l'une quelconque des revendications 1 à 7, dans lequel, pendant le mouvement d'ouverture ou de fermeture des moyens de commutation électrique (7), on constate un mouvement relatif entre le contact mobile (9) et le contact fixe (8) alors qu'ils se touchent déjà l'un l'autre sur une certaine surface conductrice de l'électricité, si bien que la surface conductrice de l'électricité est nettoyée chaque fois que le panneau (2) de pare-soleil s'ouvre ou se ferme.

10. Ensemble pare-soleil (1) selon l'une quelconque des revendications 1 à 9, dans lequel la barre (6) de pare-soleil arrive à l'intérieur de la partie avant (5) quand le panneau (2) de pare-soleil est complètement fermé et les moyens de commutation électrique (7) sont disposés dans la zone dissimulée par le panneau (2) de pare-soleil dans sa position complètement fermé.
